(19) Europäisches Patentamt
European Patent Office
Office européen des brevets

(11) EP 2 650 267 A1

# (12) EUROPEAN PATENT APPLICATION
published in accordance with Art. 153(4) EPC

(43) Date of publication:
**16.10.2013 Bulletin 2013/42**

(21) Application number: **11846683.8**

(22) Date of filing: **06.12.2011**

(51) Int Cl.:
***C03C 27/12*** (2006.01) ***B32B 27/18*** (2006.01)
***B32B 27/22*** (2006.01) ***B32B 27/30*** (2006.01)
***C01G 30/02*** (2006.01)

(86) International application number:
**PCT/JP2011/078211**

(87) International publication number:
**WO 2012/077689 (14.06.2012 Gazette 2012/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2010 JP 2010275303**

(71) Applicant: **Kuraray Co., Ltd.**
**Okayama 710-0801 (JP)**

(72) Inventors:
- **AMANO, Yusuke**
  **Kurashiki-shi**
  **Okayama 710-0801 (JP)**
- **MORIKAWA, Keisuke**
  **Kurashiki-shi**
  **Okayama 710-0801 (JP)**
- **HIGASHIDA, Noboru**
  **Kurashiki-shi**
  **Okayama 710-0801 (JP)**
- **BEEKHUIZEN, Jan**
  **Troisdorf 53840 (DE)**

(74) Representative: **Müller-Boré & Partner Patentanwälte**
**Grafinger Straße 2**
**81671 München (DE)**

## (54) LAMINATED GLASS INTERLAYER, METHOD FOR PRODUCING SAME, AND LAMINATED GLASS USING SAME

(57) Provided is an interlayer film for laminated glass comprising: a layer x which contains polyvinyl acetal (A1) having a content of vinyl alcohol units of 22 mol% or less, a plasticizer (B), heat ray shielding microparticles (C), phosphoric acid ester (D), and alkali metal salt and/or alkali earth metal salt (F), and has an acid number in accordance with JIS K2501 of 1.5 KOH mg/g or less; and a layer y containing polyvinyl acetal (A2) having a content of vinyl alcohol units of from 25 to 34 mol%, the plasticizer (B), and an ultraviolet absorber (E), wherein the layers y are located on both sides of the layer x. This enables to provide an interlayer film for laminated glass that is excellent in transparency, adhesion, durability, sound insulation, and a heat ray shielding property.

[Fig. 1]

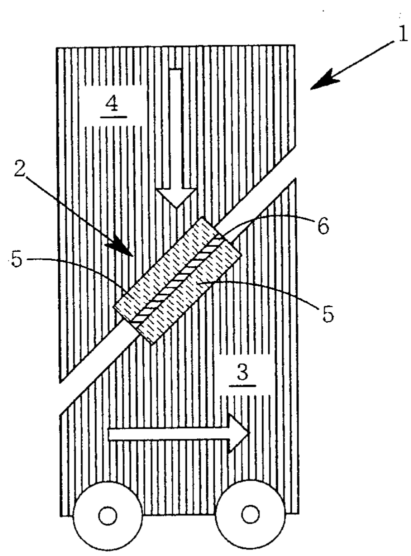


EP 2 650 267 A1

## Description

TECHNICAL FIELD

The present invention relates to an interlayer film for laminated glass that is excellent in transparency, adhesion, durability, and a heat ray shielding property. The invention also relates to a method of producing the same and to a laminated glass using the same.

BACKGROUND ART

A laminated glass is widely utilized for windowpanes of vehicles, e.g. automobiles, aircraft, buildings, and the like for improvement in safety, such as for preventing scattering of glass. Examples of such a laminated glass include one manufactured by laminating at least one pair of glass sheets while placing therebetween an interlayer film for laminated glass made of a plasticized polyvinyl butyral resin, or the like. However, use of a common interlayer film for laminated glass results in a problem that a near infrared ray (heat ray), which has a great thermal action, cannot be shielded. Therefore, a heat-shielding property is required to be imparted.

For imparting a heat ray-shielding property, resin compositions have been proposed which comprise a complex that can easily be combined with a plasticized polyvinyl butyral resin. For example, methods of incorporating a phthalocyanine compound or a copper complex for heat ray shielding have been proposed (refer to Patent Documents 1 through 3). However, there are basic problems on durability; resin compositions combined with a complex are poor in heat resistance and light resistance, and the effect declines during long-term use.

On the other hand, there have been proposed interlayer films for laminated glass to which a heat ray shielding function has been imparted by incorporating heat ray shielding microparticles, such as, tin-doped indium oxide (ITO) microparticles into a polymer. However, even in a case of using the heat ray shielding microparticles, there has been a problem in durability, such as decrease in the glass adhesion force caused by bleeding out of a surfactant added for the purpose of improvement in dispersibility of the heat ray shielding microparticles. There also has been a problem of changing in optical properties caused by transformation of the particles or photocatalytic activity thereof. With that, as a manner to improve the durability, Patent Document 4, for example, proposes a method of suppressing bleeding out of a surfactant due to addition of layered silicate. However, there has been a concern about resin degradation, such as gelation and degradation derived from a silanol group, for addition of the layered silicate. For example, Patent Documents 5 and 6 propose improvement in light resistance and moisture resistance by surface treatment using a silane coupling agent and the like. However, even in such cases, there used to be cases of not obtaining an expected effect because surface activity of the particles cannot be decreased sufficiently depending on a fixed amount of surface treatment agent, a condition of a coated film of the surface treatment agent on the surface of the particles, or a state of adsorption thereof. Therefore, in order to obtain an optimum modification state that allows expecting the necessary durability, there have been problems, such as increase in necessary energy and costs for treatment or complication in treatment procedure.

As another technique to improve the durability, methods of providing a layer having a UV blocking function outside a layer containing the heat ray shielding microparticles are known (refer to Patent Documents 7 and 8). However, in a case that resins having an identical molecular structure are simply multilayered, even if the light resistance may be improved due to UV reduction, bleeding out of the surfactant is still unavoidable, and therefore it has been difficult to exhibit stable glass adhesion over the long term.

In contrast, some other methods are proposed for multilayer films (Patent Documents 9 through 11). Patent Document 9 discloses requirements that can provide both the sound insulation and the heat ray shielding property. However, it is necessary to combine the heat ray shielding microparticles at a high concentration in the central layer in order to provide both functions, so that it is very difficult to suppress aggregation of the heat ray shielding microparticles for a low haze. In order to achieve lowering of a haze, it is necessary to add a sulfuric acid ester compound, a phosphoric acid ester compound, a chelating agent, and the like at a high concentration as a surfactant. However, these additives promote resin degradation and thus there have been problems on the heat resistance. To such problems, Patent Document 10 exemplifies a technique of improving the heat resistance by adding a basic compound to an interlayer film for laminated glass combined with fumed silica having a sound insulation performance. However, it was not clear whether it is an effective technique for the above surfactant. In Patent Document 11, a primary structure of a resin is defined from the perspective of controlling plasticizer transfer. However, a surfactant easily causes bleeding out even by a slight amount of addition, so that its control has been very difficult.

Prior Art Documents

Patent Documents

[Patent Document 1] JP 2003-265033A
[Patent Document 2] WO 2005-012454A1
[Patent Document 3] JP 2006-103069A
[Patent Document 4] JP 2003-261360A
[Patent Document 5] WO 2005-118503A1
[Patent Document 6] WO 2007-121079A2
[Patent Document 7] JP 2005-206453A
[Patent Document 8] JP 2008-534315A
[Patent Document 9] JP 2003-252657A
[Patent Document 10] EP 2008054094
[Patent Document 11] JP 2004-143008A

DISCLOSURE OF THE INVENTION

PROBLEM TO BE SOLVED BY THE INVENTION

The present invention was made in order to solve the problems mentioned above, and it is an object of the present invention to provide an interlayer film for laminated glass that is excellent in transparency, heat resistance, light resistance, long term stable glass adhesion, and a heat ray shielding property.

MEANS FOR SOLVING THE PROBLEM

As a result of intensive examination of the aforementioned problems, it was found that, in an interlayer film for laminated glass comprising: a layer x which contains polyvinyl acetal (A1) having a content of vinyl alcohol units of 22 mol% or less, a plasticizer (B), heat ray shielding microparticles (C), phosphoric acid ester (D), and alkali metal salt and/or alkali earth metal salt (F), and has an acid number in accordance with JIS K2501 of 1.5 KOH mg/g or less; and a layer y containing polyvinyl acetal (A2) having a content of vinyl alcohol units of from 25 to 34 mol%, the plasticizer (B), and an ultraviolet absorber (E), wherein the layers y are located on both sides of the layer x, compatibility of the phosphoric acid ester (D) varies between the layers, thereby suppressing bleeding out and exhibiting long term glass adhesion to complete the present invention.

It is preferred that, in the interlayer film for laminated glass of the present invention, from 0.001 to 2 parts by weight of the heat ray shielding microparticles (C) is contained based on 100 parts by weight of a total amount of the polyvinyl acetal (A1), the polyvinyl acetal (A2), and the plasticizer (B).

From the perspective of light resistance, it is preferred that surfaces of the heat ray shielding microparticles (C) are treated with an organic silicon compound having a hydrolyzable group.

It is preferred that the heat ray shielding microparticles (C) are made of at least one selected from the group consisting of tin-doped indium oxide, antimony-doped tin oxide, aluminum-doped zinc oxide, indium-doped zinc oxide, gallium-doped zinc oxide, tungsten oxide, lanthanum hexaboride, cerium hexaboride, anhydrous zinc antimonate, and copper sulfide, and more preferred that they are made of anhydrous zinc antimonate.

Further, it is preferred that a laminated glass prepared by sandwiching the interlayer film between two sheets of clear glass having a thickness of 2 mm and adhering them has a first mode damping value in accordance with ISO 16940 at 20°C of 22% or more, and it is also preferred that it has a first mode damping value in accordance with ISO 16940 at 10°C of 10% or more.

Furthermore, it is preferred that the polyvinyl acetal (A1) has a content of vinyl acetate units of from 5 to 8 mol% and the polyvinyl acetal (A2) has a content of vinyl acetate units of from 0.1 to 11 mol%.

It is also preferred that a difference between a content of the plasticizer (B) based on 100 parts by weight of the polyvinyl acetal (A1) in the layer x and a content of the plasticizer (B) based on 100 parts by weight of the polyvinyl acetal (A2) in the layer y is 5 parts by weight or more.

The aforementioned problems are also solved by providing a laminated glass obtained by adhering a plurality of glass sheets with the interlayer film for laminated glass.

The present invention also includes a method of producing the interlayer film for laminated glass comprising melt mixing a dispersion (d1) of the heat ray shielding microparticles (C) and the plasticizer (B) with the polyvinyl acetal

(A1), and molding into a film. In this case, it is preferred that the dispersion (d1) of the heat ray shielding microparticles (C), and the alkali metal salt and/or alkali earth metal salt (F) are mixed separately with the polyvinyl acetal (A1), and melt molding into a film. In addition, it is preferred that a dispersion (d2) of the alkali metal salt and/or alkali earth metal salt (F) is mixed with the polyvinyl acetal (A1).

EFFECT OF THE INVENTION

The interlayer film for laminated glass of the present invention is excellent in transparency, adhesion, durability, sound insulation, and the heat ray shielding property. Accordingly, a laminated glass excellent in transparency, adhesion, durability, sound insulation, and the heat ray shielding property can be provided by use of this interlayer film.

MODE FOR CARRYING OUT THE INVENTION

The present invention is described in detail below.
An interlayer film for laminated glass of the present invention has a layer x and layers y located on both sides of the layer x. The layer x contains polyvinyl acetal (A1) having a content of vinyl alcohol units of 22 mol% or less, a plasticizer (B), heat ray shielding microparticles (C), phosphoric acid ester (D), and alkali metal salt and/or alkali earth metal salt (F), and has an acid number in accordance with JIS K2501 of 1.5 KOH mg/g or less. The layer y contains polyvinyl acetal (A2) having a content of vinyl alcohol units of from 25 to 34 mol%, the plasticizer (B), and an ultraviolet absorber (E).
The polyvinyl acetal (A1) and the polyvinyl acetal (A2) to be used in the present invention can be obtained by causing a polyvinyl alcohol (hereinafter, may be abbreviated as PVA) to react with an aldehyde in water and/or an organic solvent in the presence of an acid catalyst, optionally neutralizing a product thus obtained, washing it and then drying it. The structures of the polyvinyl acetal (A1) and the polyvinyl acetal (A2) thus obtained are shown in the following general formula (I).
[Chem. 1]

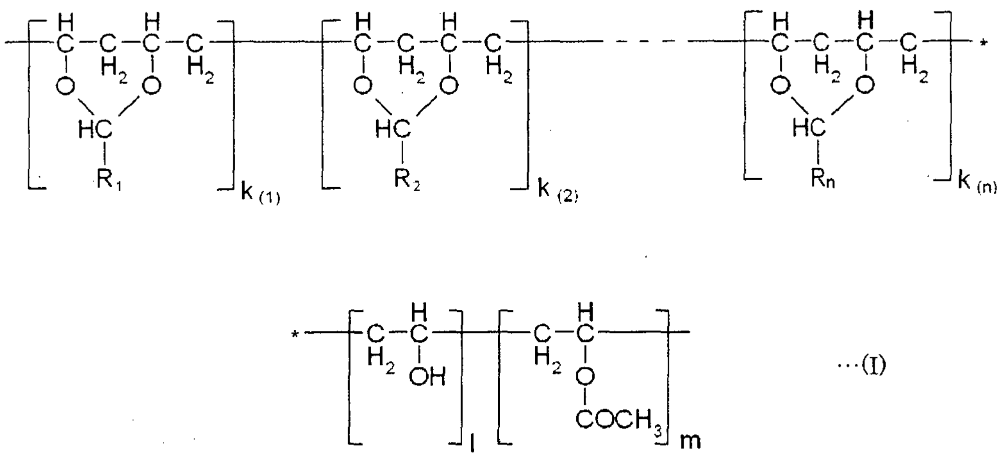

...(I)

In the general formula (I), the meanings of n, $R_a$, $k_{(a)}$, l, and m are as follows:

- n: the kind of the aldehyde used for acetalization (integer),
- $R_a$: the ath residue of the aldehyde (a is an integer of from 1 to n)
- $k_{(a)}$: the ratio (molar ratio) of acetal units containing an aldehyde residue $R_a$,
- l: the ratio (molar ratio) of vinyl alcohol units, and
- m: the ratio (molar ratio) of vinyl acetate units.

It should be noted that $k_{(1)} + k_{(2)} + \cdots + k_{(n)} + l + m = 1$.
In the general formula (I), the mode of arrangement of the units is not particularly restricted and it may be either block-like or random-like.
Each operation of the acetalization reaction, the neutralization, the washing and the dewatering in the production

of the polyvinyl acetal (A1) and the polyvinyl acetal (A2) is not particularly limited and may be carried out in a known method. For example, an aqueous solvent method in which an aqueous solution of PVA and an aldehyde are subjected to an acetalization reaction in the presence of an acid catalyst to precipitate resin particles; an organic solvent method in which PVA is dispersed in an organic solvent, followed by an acetalization reaction with an aldehyde in the presence of an acid catalyst, and then the reaction solution is added to water or the like, which is a poor solvent for polyvinyl acetal, for precipitation; and the like may be employed. By any method, a slurry in which polyvinyl acetal is dispersed in a medium is obtained.

The slurry obtained in the aforesaid method is acidic due to the acid catalyst. Therefore, as needed, its pH is adjusted to be 4.5 or more, preferably from 6 to 9, and more preferably from 6 to 8 by addition of an alkaline neutralizer such as sodium hydroxide or sodium carbonate.

As the PVA for use in the production of the polyvinyl acetal (A1) and the polyvinyl acetal (A2), one having a viscosity average degree of polymerization of from 500 to 4000 is usually used and one having a viscosity average degree of polymerization of from 1000 to 2500 is preferably used. The viscosity average degree of polymerization of the polyvinyl acetal is substantially same as that of the starting PVA. When the viscosity average degree of polymerization of the starting PVA is less than 500, the mechanical properties may be insufficient and the mechanical properties, in particular toughness, of the interlayer film for laminated glass of the present invention may be insufficient. In contrast, when the starting PVA has a viscosity average degree of polymerization of greater than 4000, the melt viscosity at the time of melt molding may become excessively high and also problems may occur in a production process. In the case that two or more kinds of polyvinyl acetal are used respectively as the polyvinyl acetal (A1) and the polyvinyl acetal (A2), it is only required that the average value taking account of their blending ratios satisfies the aforementioned range. Here, the degree of polymerization of PVA can be measured in accordance with JIS K6726. Specifically, it can be determined from the limiting viscosity measured in water at 30°C after resaponification and subsequent purification of the PVA.

The PVA mentioned above is not particularly limited and conventionally known PVA such as those produced by saponification of polyvinyl acetate or the like in the presence of alkali, acid, ammonia water or the like may be used. It may be completely saponified PVA and may also be partially saponified PVA. The degree of saponification of the PVA is preferably 80 mol% or more. And it may contain a partially crosslinked structure. The PVA mentioned above may be composed of either a single kind or a mixture of two or more kinds. In the case that two or more kinds of PVA are used, it is only required that the average value taking account of their blending ratios satisfies the aforementioned range of the degree of saponification.

As the above-mentioned PVA, saponification products of copolymers of vinyl acetate and the like with a monomer copolymerizable therewith, such as ethylene-vinyl alcohol copolymers and partially saponified ethylene-vinyl alcohol copolymers, may also be used. Furthermore, modified PVA modified with carboxylic acid or the like may also be used.

The aldehyde to be used for acetalizing PVA is not particularly limited and it may include, for example, formaldehyde (including paraformaldehyde), acetaldehyde (including paracetaldehyde), propionaldehyde, butyl aldehyde, amyl aldehyde, hexyl aldehyde, heptyl aldehyde, 2-ethylhexyl aldehyde, cyclohexyl aldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, and β-phenylpropionaldehyde. One kind of these aldehydes may be used singly, or two or more kinds may also be used in combination. Among these aldehydes, butyl aldehyde is used preferably from the perspective of the ease in the production.

The polyvinyl acetal obtained by acetalization of PVA using butyl aldehyde is called polyvinyl butyral. In the present invention, the polyvinyl acetal (A1) and the polyvinyl acetal (A2) is preferably polyvinyl butyral in which the proportion of the butyral units in the acetal units (refer to the formula given below) is greater than 0. 9, respectively. In other words, when $R_1 = C_3H_7$ (a residue of butyl aldehyde) in the structural formula of the polyvinyl acetal (A) shown in the above formula (I), the relationship expressed by $k_{(1)} / (k_{(1)} + k_{(2)} + \cdots + k_{(n)}) > 0.9$ is preferred.

The acid catalyst for the acetalization reaction is not particularly limited and it may include, for example, organic acids such as acetic acid and p-toluenesulfonic acid, and inorganic acids such as nitric acid, sulfuric acid and hydrochloric acid. The neutralizer for the acetalization reaction is not particularly limited and it may include, for example, alkalis such as sodium hydroxide, potassium hydroxide, ammonia, sodium acetate, sodium carbonate, sodium hydrogencarbonate, and potassium carbonate; alkylene oxides such as ethylene oxide; and glycidyl ethers such as ethylene glycol diglycidyl ether.

The degree of acetalization, the content of vinyl alcohol units, and the content of vinyl acetate units of the polyvinyl acetal (mol%) can be defined by the following formulae.

$$\text{Degree of acetalization (mol\%)} = [(k_{(1)} + k_{(2)} + \cdots + k_{(n)}) \times 2]/[(k_{(1)} + k_{(2)} + \cdots k_{(n)}) \times 2 + l + m] \times 100$$

$$\text{Content of Vinyl Alcohol Units (mol\%)} = [1/[(k_{(1)} + k_{(2)} + \cdots + k_{(n)}) \times 2 + 1 + m] \times 100$$

$$\text{Content of Vinyl Acetate Units (mol\%)} = [m/[(k_{(1)} + k_{(2)} + \cdots + k_{(n)}) \times 2 + 1 + m] \times 100$$

The degree of acetalization of the polyvinyl acetal (A1) and the polyvinyl acetal (A2) is preferably from 55 to 83 mol%. In a case of a degree of acetalization of less than 55 mol%, there may be disadvantageous cases in terms of cost effectiveness because of its high production costs, its unavailability, and also its poor melt-processability. In a case of higher than 83 mol%, there may be disadvantageous cases in terms of productivity because of the necessity to extend the acetalization reaction time. One kind of the polyvinyl acetal (A1) and the polyvinyl acetal (A2) may be used singly, or two or more kinds may also be used in combination, respectively. In the case that two or more kinds of polyvinyl acetal are used, it is only required that the average value taking account of their blending ratios satisfies the aforementioned range of the degree of acetalization.

The interlayer film for laminated glass of the present invention is controlled to have different contents of vinyl alcohol units of the polyvinyl acetal (A1) contained in the layer x and the polyvinyl acetal (A2) contained in the layer y, respectively. More specifically, the content of vinyl alcohol units in the polyvinyl acetal (A1) contained in the layer x is 22 mol% or less, preferably from 16.5 to 21 mol%, and more preferably from 17 to 20 mol%. In addition, the content of vinyl alcohol units in the polyvinyl acetal (A2) contained in the layer y is from 25 to 34 mol%, preferably from 27 to 32 mol%, and more preferably from 29 to 31 mol%. Making distinctions between the contents of vinyl alcohol units of the polyvinyl acetals in the layer x and the layer y enables to effectively suppress bleeding out of the phosphoric acid ester (D) as a result that the affinity of the phosphoric acid ester (D) to the layer x becomes higher than the affinity to the layer y.

The polyvinyl acetal (A1) has a content of vinyl acetate units of preferably from 5 to 8 mol%, more preferably from 5 to 7.9 mol%, even more preferably from 5 to 7.5 mol%, and most preferably from 5.3 to 7.2 mol%. In addition, the polyvinyl acetal (A2) has a content of vinyl acetate units of preferably from 0.1 to 11 mol%, more preferably from 0.1 to 4 mol%, and even more preferably from 0.1 to 2 mol%. The contents of vinyl acetate units fall in these ranges, thereby making the layer x a soft layer, and while maintaining the mechanical strength needed for an interlayer film for laminated glass, exhibiting a sound insulation performance described later.

Here, the sound insulation performance is evaluated by a damping value. In other words, it is preferred that a laminated glass prepared by sandwiching the interlayer film between two sheets of clear glass having a thickness of 2 mm and adhering them has a first mode damping value in accordance with ISO 16940 at 20°C of 22% or more, and it is also preferred that the laminated glass thus prepared has a first mode damping value in accordance with ISO 16940 at 10°C of 10% or more.

As the plasticizer (B) used for the present invention, known plasticizers used for plasticization of polyvinyl acetal can be used. Preferably, one or more of organic plasticizers, such as ester of monobasic acid and aliphatic polyol and ester of polybasic acid and linear or branched alcohol, may be used.

Although the ester of monobasic acid and aliphatic polyol is not particularly limited, ester of monobasic acid and aliphatic diol is preferred, and ester of monobasic acid and polyalkylene glycol, particularly polyethylene glycol is more preferred. Specifically, ester of monobasic acid having a carbon number of from 4 to 10, and di-, tri- or tetraalkylene glycol is used preferably.

Although the ester of polybasic acid and linear or branched alcohol is not particularly limited, preferably used is, for example, ester of adipic acid, pimelic acid, suberic acid, azelaic acid, sebacic acid, phthalic acid and cyclohexanedicarboxylic acid, and linear or branched alcohol having a carbon number of from 4 to 10.

Among the plasticizers mentioned above, preferably used are one or more of, for example, triethylene glycol di- 2- ethyl butyrate, triethylene glycol di- 2- ethylhexanoate, triethylene glycol di- n- heptanoate, tetraethylene glycol di- 2- ethylhexanoate, tetraethylene glycol- di- n- heptanoate, oligoethylene glycol di- 2- ethylhexanoate, triethylene glycol- di- isononanoate, triethylene glycol- di- 2- propyl hexanoate, di- propylene glycol benzoate, dihexyl adipate, di- 2- butoxyethyl adipate, di- 2- butoxyethoxyethyl adipate, di- 2- ethylhexyl adipate, dibutyl sebacate, di- 2- butoxyethyl sebacate, di- 2- ethylhexyl sebacate, di- 2- ethylhexyl phthalate, di- isononyl phthalate, tris 2- ethylhexyl phosphate, diisononyl cyclohexane dicarboxylate, and the like.

It is preferred that the content of the plasticizer (B) is, for each layer, from 20 to 100 parts by weight based on 100 parts by weight of the polyvinyl acetal (A1) or the polyvinyl acetal (A2). In a case of less than 20 parts by weight,

the interlayer film or laminated glass thus obtained may have insufficient impact resistance, and on the contrary, in a case of greater than 100 parts by weight, the plasticizer (B) bleeds out and, as a result, the interlayer film or laminated glass thus obtained may have decreased transparency or the adhesion between glass and the interlayer film may decrease.

It is preferred from the perspective of the sound insulation performance that a difference between a content of the plasticizer (B) based on 100 parts by weight of the polyvinyl acetal (A1) in the layer x and a content of the plasticizer (B) based on 100 parts by weight of the polyvinyl acetal (A2) in the layer y is 5 parts by weight or more. The difference between the contents is more preferably 7.5 parts by weight or more and even more preferably 10 parts by weight or more. It is also preferred that the difference between the contents is 50 parts by weight or less.

The layer x of the interlayer film for laminated glass of the present invention contains the heat ray shielding microparticles (C) for the purpose of imparting a heat ray shielding property. The heat ray shielding microparticles used in this case are not particularly limited as long as they have at least a property of absorbing rays of light in a near infrared wavelength region, and they may include, for example, tin-doped indium oxide, antimony-doped tin oxide, aluminum-doped zinc oxide, indium-doped zinc oxide, gallium-doped zinc oxide, tungsten oxide, lanthanum hexaboride, cerium hexaboride, anhydrous zinc antimonate, copper sulfide, and the like. One kind of them may be used singly, or two or more kinds may also be used in combination. Among these, from the perspective of the performances, the safety, the raw material availability, the price, and the like, it is preferred to contain anhydrous zinc antimonate. The heat ray shielding microparticles (C) may also be contained in the layer y as needed.

It is preferred that from 0.001 to 2 parts by weight of the heat ray shielding microparticles (C) is contained based on 100 parts by weight of a total amount of the polyvinyl acetal (A1), the polyvinyl acetal (A2), and the plasticizer (B). When the content becomes 0.001 parts by weight or less, the expected heat ray shielding effect may not be obtained. It is more preferably 0.002 parts by weight or more, and even more preferably 0.005 parts by weight or more. In addition, when the content becomes greater than 2 parts by weight, the transparency of a laminated glass may decrease. It is more preferably 1.5 parts by weight or less, and even more preferably 1 part by weight or less.

The heat ray shielding microparticles (C) may have surfaces that are treated with an organic silicon compound having a hydrolyzable group. The treatment with the organic silicon compound on the surface of the particles enables to further suppress the degradation of the resin and the transformation of the heat ray shielding microparticles. While methods of treating surfaces of inorganic microparticles with metal oxide are known in general, the difficulty of treatment depends on the surface state of the subjected inorganic microparticles, specifically the hydroxyl group content present on the surface of the particles. Accordingly, in some cases, it is very difficult to treat the surface depending on the kind of inorganic microparticles. In particular, the surface state of the anhydrous zinc antimonate is different from that of other heat ray shielding microparticles. Therefore, it is difficult to treat its surface and there is almost no actual instance that its surface is treated with an organic silicon compound. To the contrary, the method of the present invention is applicable to even the anhydrous zinc antimonate.

The organic silicon compound having a hydrolyzable group is not particularly limited as long as it has at least one or more hydrolyzable groups that can be cleaved due to hydrolysis. For example, an organic silicon compound represented by the following formula (II) is used.

$$Si\,(OR^1)_aR^2_b \qquad (II)$$

In the formula (II), $R^1$ represents a hydrogen atom or an alkyl group, $R^2$ represents a hydrogen atom, a halogen atom, a substituted group including an amino group, an amide group, an acyl group, an allyl group, an aryl group, a vinyl group, an epoxy group, a sulfinyl group, a hydroxyl group, a mercapto group, a partially substitutable linear or cyclic alkyl group, and the like. In addition, a and b represent an integer of from 0 to 4, where a + b is 4.

Among the organic silicon compounds represented by the general formula (II), it may include, for example, methyltrimethoxysilane, dimethyldimethoxysilane, tetraethoxysilane, methyltriethoxysilane, dimethyldiethoxysilane, ethyltriethoxysilane, cyclohexylmethyldimethoxysilane, methyloctyldimethoxysilane, methylphenyldimethoxysilane, diphenyldiethoxysilane, phenyltrimethoxysilane, phenyltriethoxysilane, n- propyltrimethoxysilane, n- propyltriethoxysilane, isobutyltrimethoxysilane, isobutyltriethoxysilane, hexyltrimethoxysilane, hexyltriethoxysilane, octyltrimethoxysilane, octyltriethoxysilane, decyltrimethoxysilane, octadecyltrimethoxysilane, trifluoropropyltrimethoxysilane, vinyltrimethoxysilane, vinyltriethoxysilane, tris (2- methoxyethoxy) vinylsilane, allyltriethoxysilane, acetoxymethyltrimethoxysilane, acetoxymethyltriethoxysilane, acetoxyethyltrimethoxysilane, acetoxyethyltriethoxysilane, acetoxypropyltrimethoxysilane, 2- acetoxypolyethyleneoxypropyl triethoxysilane, 2- (3, 4- epoxycyclohexyl) ethyltrimethoxysilane, 3- glycidoxypropyltrimethoxysilane, 3- glycidoxypropyl methyldiethoxysilane, 3- glycidoxypropyltriethoxysilane, p- styryltrimethoxysilane, 3- methacryloxypropyl methyldimethoxysilane, 3- methacryloxy propyltrimethoxysilane, 3- methacryloxypropyl methyldiethoxysilane, 3- methacryloxypropyl triethoxysilane, acryloxymethyltrimethoxysilane, 2- acryloxyethoxytrimethoxysilane, 3- acryloxypropyltrimethoxysilane, hydroxy (polyethyleneoxy) propyltriethoxysilane, 2- hydroxy- 4- (3- methyldiethoxysilylpropoxy) diphenylketone, 2- hydroxy- 4- (3- triethoxysilylpropoxy) diphenylketone, N- 2- (aminoethyl)- 3-aminopropyl methyldimethoxysilane, N- 2- (aminoethyl)- 3- aminopropyltrimethoxysilane, N- 2- (aminoethyl)- 3- aminopropyltriethoxysilane, 3- aminopropyltrimethoxysilane, 3- aminopropyltriethoxysilane, 3- triethoxy silyl- N- (1, 3- dimethylbutylidene) propylamine, N- phenyl- 3- aminopropyltrimethoxysilane, N- (vinylbenzil)- 2- aminoethyl- 3- aminopropyltrimethoxysilane, 3- ureidopropyltriethoxysilane, chlorotrimethoxysilane, chlorotriethoxysilane, chloromethyltriethoxysilane, 3- chloropropyltrimethoxysilane, p- chloromethylphenyltrimethoxysilane, 3- mercaptopropylmethyldimethoxysilane, 3- mercaptopropyltrimethoxysilane, bis (triethoxysilylpropyl) tetra sulfide, 3- isocyanatepropyltriethoxysilane, methyltrichlorosilane, dimethyldichlorosilane, trimethylchlorosilane, phenyltrichlorosilane, vinyltrichlorosilane, hexamethyldisilazane, 1, 3, 5, 7- tetraethoxy- 1, 3, 5, 7- tetramethylcyclotetrasiloxane, hexaphenylcyclotrisiloxane, and the like. One of these may be used singly, or two or more may also be used in combination.

In the heat ray shielding microparticles (C), it is preferred that a fixed amount of the organic silicon compound having a hydrolyzable group is from 0.05 to 50 parts by weight based on 100 parts by weight of the heat ray shielding microparticles (C). When the fixed amount of the organic silicon compound is less than 0.05 parts by weight, the fixed amount of the organic silicon compound on the surface of the particles is not sufficient, so that the effects of decreasing the photocatalitic activity, preventing transformation of the particles, and the like may not be obtained easily. It is more preferred that the amount is 0.1 parts by weight or more. When the amount is greater than 50 parts by weight, the particles may be coarsened and the intended dispersion may not be obtained and also the surface treatment may become high in cost. It is more preferred that the amount is 40 parts by weight or less.

As a method of preparing the heat ray shielding microparticles with their surfaces treated with the organic silicon compound having a hydrolyzable group, preferred is a method, comprising: preparing a dispersion with the heat ray shielding microparticles finely dispersed therein in advance; and adding the organic silicon compound thereto. This method enables to concentrate the organic silicon compound on the surface of nanosized particles, and as a result, to uniformly treat the entire particles. It is also preferred that, after adding the organic silicon compound, the dispersion medium is distilled away once to bake the powder of the mixture thus obtained at from 100 to 400°C. The treatment at high temperatures after distilling away the solvent once enables to fix the organic silicon compound on the surface of the heat ray shielding microparticles by a strong chemical bond. This enables to suppress leaving of the organic silicon compound during melt kneading and to obtain a higher effect of surface treatment.

Although the solvent contained in the dispersion of the heat ray shielding microparticles is not particularly limited, water or an organic solvent with high compatibility to water is used preferably considering hydrolyzability of the organic silicon compound. As such an organic solvent, methanol, ethanol, n- propanol, i- propanol, n- butanol, ethylene glycol, diethylene glycol, hexylene glycol, tetrahydrofuran, acetone, γ- butyrolactone, ε- caprolactone, N- methylpyrrolidone, N, N- dimethylformamide, N, N- dimethylacetamide, dimethyl sulfoxide, and the like may be used.

The layer x in the interlayer film for laminated glass of the present invention contains phosphoric acid ester (D) as a dispersant for the heat ray shielding microparticles (C). The phosphoric acid ester (D) is adsorbed on the surface of the heat ray shielding microparticles (C), thereby the surface becomes hydrophobic. As a result, aggregation of the particles is effectively suppressed when combined with the polyvinyl acetal (A1) and the plasticizer (B).

The phosphoric acid ester (D) is not particularly limited, and phosphoric acid ester of monobasic acid or dibasic acid is used preferably. For example, it may include: Disperbyk-102, Disperbyk-103, Disperbyk-106, Disperbyk-107, Disperbyk-108, Disperbyk-110, Disperbyk-111, Disperbyk-181, Disperbyk-182, Disperbyk-183, Disperbyk-184, Disperbyk-185, Disperbyk-187, Disperbyk-190, Disperbyk-191, and Disperbyk-192 produced by BYK Japan KK; PLYSURF A208B, PLYSURF A208F, PLYSURF A210B, PLYSURF A212C, PLYSURF A213B, PLYSURF A215C, PLYSURF A212C, PLYSURF A219B, PLYSURF AL, and PLYSURF M208F produced by Dai-ichi Kogyo Seiyaku Co., Ltd.; ADEKA COL TS-230E, ADEKA COL CS-141E, ADEKA COL CS-1361E, ADEKA COL CS-279, ADEKA COL PS-440E, ADEKA COL PS-810E, ADEKA COL PS-807, and ADEKA COL PS-984 produced by ADEKA Corporation; and the like. One of these may be used singly, or two or more may also be used in combination.

It is preferred that the layer x has a content of the phosphoric acid ester (D) of from 0.005 to 2 parts by weight based on 100 parts by weight of the total amount of the polyvinyl acetal (A1) and the plasticizer (B). When the content is less than 0.005 parts by weight, there are some cases that the dispersion effect is not obtained sufficiently. The content is more preferably 0.05 parts by weight or more, and even more preferably 0.1 parts by weight or more. In addition, when the content is greater than 2 parts by weight, there are some cases that bleeding out of the phosphoric acid ester is considerable and the adhesion force between the interlayer film and glass cannot be maintained stably. It is more preferred that the content is 1.8 parts by weight or less.

In the interlayer film for laminated glass of the present invention, alkali metal salt and/or alkali earth metal salt (F) is incorporated for the purpose of suppressing resin degradation, because the layer x is prone to be degraded due to the influence of the heat ray shielding microparticles (C) and the phosphoric acid ester (D).

Although the alkali metal salt and/or alkali earth metal salt is not particularly limited, alkali metal and/or alkali earth metal to form the salt may include sodium, potassium, magnesium, and the like. In addition, acid to form the salt may include organic acids, such as linear carboxylic acids, like formic acid, acetic acid, propionic acid, butyric acid, valeric acid, hexanoic acid, and octanoic acid, and branched carboxylic acids, like 2-ethylbutanoic acid, and 2-ethylhexanoic acid, and inorganic acids, such as hydrochloric acid, nitric acid, and sulfuric acid. One of these may be used singly, or two or more may also be used in combination.

It is preferred that the layer x has a content of the alkali metal salt and/or alkali earth metal salt (F) to contain from 0.006 to 0.2 parts by weight of a total of the content of alkali metal and/or alkali earth metal derived from alkali metal salt and/or alkali earth metal salt based on 100 parts by weight of the polyvinyl acetal (A1). When the content is less than 0.006 parts by weight, there are some cases that degradation of the resin derived from the phosphoric acid ester cannot be suppressed sufficiently. It is more preferred that the content is 0.008 parts by weight or more. In addition, when the content is greater than 0.2 parts by weight, there are some cases that aggregation of the heat ray shielding microparticles is promoted, and as a result, the transparency of the laminated glass is lost. The content is more preferably 0.1 parts by weight or less, and even more preferably 0.04 parts by weight or less.

In the present invention, the phosphoric acid ester (D) and the alkali metal salt and/or alkali earth metal salt (F) are contained in a certain quantitative ratio. In other words, the layer x containing these is adjusted to have an acid number in accordance with JIS K2501 of 1.5 KOH mg/g or less. In such range of acid numbers, it is preferred that the content of phosphoric acid ester (D) is not more than the content of the alkali metal salt and/or alkali earth metal salt (F) in molar ratio. Such adjustment of the quantitative ratio enables to suppress the resin degradation caused by the phosphoric acid ester (D) and to improve the durability.

The resin composition layers constituting the interlayer film for laminated glass of the present invention further contain an ultraviolet absorber (E). Addition of the ultraviolet absorber (E) to the layers y located outside the layer x containing the heat ray shielding microparticles (C) enables to prevent exposure of the heat ray shielding microparticles (C) to ultraviolet rays and to suppress degradation of the resin and transformation of the particles caused by photocatalitic activity of the particles. The ultraviolet absorber (E) may also be contained in the layer x.

Although the ultraviolet absorber (E) is not particularly limited, it may include, for example: benzotriazole-based ultraviolet absorbers, such as Tinuvin P, Tinuvin 213, Tinuvin 234, Tinuvin 326, Tinuvin 328, Tinuvin 329, and Tinuvin 571 produced by Ciba Japan K.K.; triazine-based ultraviolet absorbers, such as Tinuvin 1577 produced by Ciba Japan K.K.; benzophenone-based ultraviolet absorbers, such as CHIMASSORB 81 produced by Ciba Japan K.K.; and malonic acid ester-based ultraviolet absorbers, such as Hostavin PR-25 produced by Clariant Japan KK. One of these may be used singly, or two or more may also be used in combination. In addition to them, known light stabilizers, such as hindered amine compounds, may also be used together.

Although the content of the ultraviolet absorber (E) in the layer y is not particularly limited, it is preferred that the content is from 0.01 to 5 parts by weight based on 100 parts by weight of the total amount of the polyvinyl acetal (A2) and the plasticizer (B). When the content is less than 0.01 parts by weight, there are some cases that a sufficient ultraviolet ray shielding effect cannot be expected. The content is more preferably 0.05 parts by weight or more, and even more preferably 0.1 parts by weight or more. When the content is greater than 5 parts by weight, there are some cases that the interlayer film is colored considerably to become unsuitable. The content is more preferably 2 parts by weight or less, and even more preferably 1 part by weight or less.

The layer x constituting the interlayer film for laminated glass of the present invention is obtained by melt molding a resin composition containing the polyvinyl acetal (A1), the plasticizer (B), the heat ray shielding microparticles (C), the phosphoric acid ester (D), and the alkali metal salt and/or alkali earth metal salt (F). At this time, it is preferred to include melt mixing a dispersion (d1) of the heat ray shielding microparticles (C) and the plasticizer (B) with the polyvinyl acetal (A1), and molding into a film, and it is more preferred that the dispersion (d1) of the heat ray shielding microparticles (C), and the alkali metal salt and/or alkali earth metal salt are mixed with the polyvinyl acetal (A1) separately, and then melt molding. The separate mixing enables to suppress aggregation of the heat ray shielding microparticles (C) in the resin composition layer, and as a result, to obtain a film having a low haze.

A method of mixing the heat ray shielding microparticles (C) and the alkali metal salt and/or alkali earth metal salt (F) separately with the polyvinyl acetal (A1) may include, for example: a method comprising adding the shielding microparticles (C) and the alkali metal salt and/or alkali earth metal salt (F) in an unchanged state thereof separately with the polyvinyl acetal (A1); a method comprising mixing the dispersion (d1) of the heat ray shielding microparticles (C) and the alkali metal salt and/or alkali earth metal salt (F) separately with the polyvinyl acetal (A1); a method comprising mixing a dispersion (d2) of the alkali metal salt and/or alkali earth metal salt (F) and the heat ray shielding microparticles (C) separately with the polyvinyl acetal (A1); a method comprising mixing the dispersion (d1) of the heat ray shielding microparticles (C) and the dispersion (d2) of the alkali metal salt and/or alkali earth metal salt (F) separately with the polyvinyl acetal (A1); a method comprising mixing a molded article of the polyvinyl acetal (A1) containing the heat ray shielding microparticles (C) with the dispersion (d2) of the alkali metal salt and/or alkali earth metal salt (F); a method comprising mixing a molded article of the polyvinyl acetal (A1) containing the alkali metal salt and/or alkali earth metal salt (F) with the dispersion (d1) of the heat ray shielding microparticles (C); and the like. Among these, as described above, the methods comprising mixing the heat ray shielding microparticles (C) as the dispersion (d1) are preferred, and the method comprising mixing the dispersion (d1) of the heat ray shielding microparticles (C) and the dispersion (d2) of the alkali metal salt and/or alkali earth metal salt (F) separately with the polyvinyl acetal (A1) is more preferred.

Although the phosphoric acid ester (D) may be added to any of the dispersion (d1) and the dispersion (d2), it is preferred that it is contained at least in the dispersion (d1) from the perspective of dispersibility of the heat ray shielding microparticles (C). A method of obtaining the dispersion (d1) containing the phosphoric acid ester (D) may be any of: a method comprising mixing the heat ray shielding microparticles (C), the phosphoric acid ester (D), and a solvent, followed by grinding; a method comprising adding the phosphoric acid ester (D) to a dispersion that contains the heat ray shielding microparticles (C) and a solvent and is subjected to grinding; and a method comprising adding a dispersion that contains the heat ray shielding microparticles (C) and a solvent and is subjected to grinding to the phosphoric acid ester (D). The order to mix the dispersion (d1), the dispersion (d2), the plasticizer (B), and the polyvinyl acetal (A1) is not particularly limited.

The solvent contained in the dispersion (d1) is not particularly limited, and a generally used organic solvent, water, a plasticizer, or the like may be used. The generally used organic solvent may include, for example, methanol, ethanol, n- propanol, i- propanol, n- butanol, ethylene glycol, diethylene glycol, hexylene glycol, tetrahydrofuran, dioxane, acetone, methyl ethyl ketone, γ- butyrolactone, ε- caprolactone, N- methylpyrrolidone, N, N- dimethylformamide, N, N-dimethylacetamide, dimethyl sulfoxide, hexane, toluene, acetonitrile, and the like.

The solvent contained in the dispersion (d2) is not particularly limited and a solvent same as the dispersion (d1) may be used as the dispersion medium, it is particularly preferred to be in a state of suspending an aqueous solution of alkali metal salt and/or alkali earth metal salt in a plasticizer.

Although the method of mixing the raw materials is not particularly restricted, it is preferred to mix them by melt mixing from the viewpoint of productivity or the like. The melt mixing method is not particularly restricted and known kneading machines, such as single screw extruders, twin screw extruders, Brabenders, open rolls, and kneaders, may be used.

The layer y constituting the interlayer film for laminated glass of the present invention is obtained by melt molding a resin composition containing the polyvinyl acetal (A2), the plasticizer (B), and the ultraviolet absorber (E) same as the layer x. At this time, although a method of adding the ultraviolet absorber (E) is not particularly limited, it is preferred to be mixed, to the polyvinyl acetal (A2), in a state of dissolving or suspending the ultraviolet absorber (E) in the plasticizer (B) in advance.

The mixed melt is melt molded into a film to form a resin composition layer. A known method may be employed for the molding method. A film may be produced by attaching a T-die directly to the melt-kneading machine, or a film may also be produced separately after once producing resin composition pellets. The thickness of a film is not particularly limited. Considering the penetration resistance and the weather resistance which a laminated glass is required to have at least, it is from 0.2 to 1.2 mm, and preferably is from 0.3 to 1.0 mm.

To the method of producing an interlayer film for laminated glass having a plurality of layers, a general method of molding a multilayer film is applicable. In other words, it may include: a method comprising coextruding resin compositions for each layer to a die or a feedblock; a method comprising molding each layer into a film separately, followed by lamination; and the like.

In the interlayer film for laminated glass of the present invention, various additives, such as adhesion force controlling agents other than the above component (F), antioxidants, stabilizers, lubricants, flame retardants, processing aids, antistatic agents, colorants, heat ray reflecting agents and/or heat ray absorbents other than the above component (C), impact-resistant aids, fillers and moisture resisting agents, for example, may be added as needed unless the effects of the invention are damaged.

Using the thus obtained interlayer film for laminated glass of the present invention, a laminated glass is produced. Glass to be used is not particularly limited and those commonly used may be used, and for example, it may include float sheet glass, polished sheet glass, figured sheet glass, wire-meshed glass, wire-lined glass, colored glass, heat ray-absorbing glass, and the like. As well as inorganic glass, polycarbonate, polymethyl methacrylate and the like, which are excellent in transparency, may also be used. A method of producing the laminated glass of the present invention is not particularly limited and conventionally known methods may be used. Specifically, a laminated glass is produced by sandwiching an interlayer film between at least two glass sheets, heating them to melt the film, followed by cooling them to solidify the melt.

The interlayer film for laminated glass of the present invention is excellent in transparency, adhesion, durability, and a heat ray shielding property. Therefore, a laminated glass obtained by laminating this with glass may be used widely as window materials of buildings, vehicles, aircraft, ships, and the like. Vehicles in which a laminated glass is used may include automobiles and trains. In automobiles, the laminated glass of the present invention may be used as a windshield, a side glass, a rear glass, a roof glass, or the like.

(Examples)

The present invention will be described in more detail below with reference to Examples, but the invention is not limited at all by these Examples. In the following Examples and Comparative Examples, each evaluation value was

measured and calculated in accordance with the methods described below.

[Haze]

A laminated glass prepared was measured for the haze (%) using a turbidimeter "NDH-5000" manufactured by Nippon Denshoku Industries Co., Ltd. in accordance with JIS K7105.

[Visible Light Transmittance and Solar Transmittance]

A prepared laminated glass sheet was measured for the transmittance within a wavelength range of from 280 to 2500 nm using a spectrophotometer "SolidSpec-3700" manufactured by Shimadzu Corporation. Then, a visible light transmittance (%) of from 380 to 780 nm was determined in accordance with JIS R3106. Moreover, a solar transmittance (%) of from 300 to 2500 nm was determined using a weighting factor provided in JIS R3106.

[Yellowness Index (YI)]

A prepared laminated glass sheet was measured for the transmittance within a wavelength region of from 190 to 2500 nm using a spectrophotometer "SolidSpec-3700" manufactured by Shimadzu Corporation. Based on spectrum data thus obtained, the YI (%) was calculated by in accordance with JIS K7105.

[Acid Number]

A prepared film was subjected to calculation of the acid number (KOH mg/g) in accordance with JIS K2501.

[Heat Resistance]

A laminated glass thus obtained was subjected to standing still at 100°C for one month, and a difference between the YIs (Δ YI) before and after the heating was calculated to have an index of heat resistance.

[Glass Adhesion Force]

The glass adhesion of an interlayer film was evaluated by measuring compression shear strength in accordance with the method provided in JP 2001-526165A. Using a compression shear testing apparatus 1 illustrated in Fig. 1, compression shear testing of a laminated glass 2 was performed. The laminated glass 2 to be a sample was cut into dimensions of 26 mm x 24 mm and attached between a lower jig 3 and an upper jig 4 at an angle of 45°, and a vertical downward force was applied accurately to the upper jig 4. At this time, the lower jig 3 is movable horizontally. The maximum force necessary to shear an interlayer film 6 from the glass 5 is divided by a sample area, thereby measuring the compression shear strength ($N/mm^2$) to obtain an average value of measurements in four times. The compression shear strength of a sample stored at 100°C for one month immediately after the preparation of the laminated glass 2 was measured in accordance with the above method to be evaluated as A in a case of the value of 5 $N/mm^2$ or more and as B in a case of less than 5 $N/mm^2$.

Example 1

[Preparation of Interlayer Film for Laminated Glass]

A methanol dispersion of anhydrous zinc antimonate ("CX- Z693M- F" produced by Nissan Chemical Industries, Ltd.), which is $ZnSb_2O_6$, was subjected to grinding with a bead mill, thereby preparing a methanol dispersion of zinc antimonate at 60 wt% concentration. A dispersion (d1) obtained by mixing 1.33 g of the dispersion thus obtained, 0.2 g of "DISPERBYK- 102" produced by BYK Japan KK as phosphoric acid ester, and 9.9 g of triethylene glycol- di- 2-ethylhexanoate (hereinafter, abbreviated as 3G8) as a plasticizer; and a dispersion (d2) obtained by mixing 10 g of 3G8, 0.14 g of "Tinuvin 328" produced by Ciba Japan K.K. as an ultraviolet absorber, and 0.08 g of a 25 wt% aqueous solution of a mixture of magnesium acetate and potassium acetate (mixing weight ratio: 2/1) were separately mixed with 35.3 g of polyvinyl butyral (starting polyvinyl alcohol having a viscosity average degree of polymerization of 1700, a degree of acetalization of 74 mol%, vinyl alcohol units of 19 mol%, and vinyl acetate units of 7 mol%) . The resulting mixture was kneaded in a Labo Plastomill at 100°C and then was press molded with a pressing machine at 140°C for five minutes, thereby preparing an interlayer film for laminated glass (layer x) of 0.16 mm. Further, 15.2 g of 3G8, 0.14 g of "Tinuvin 328" produced by Ciba Japan K. K. as an ultraviolet absorber, and 0.08 g of a 25 wt% aqueous solution of a mixture of

magnesium acetate and potassium acetate (mixing weight ratio: 2/1) were mixed with 40 g of polyvinyl butyral (starting polyvinyl alcohol having a viscosity average degree of polymerization of 1700, a degree of acetalization of 70 mol%, vinyl alcohol units of 29 mol%, and vinyl acetate units of 1 mol%) . The resulting mixture was kneaded in a Labo Plastomill at 170°C and then was press molded with a pressing machine at 140°C for five minutes, thereby preparing an interlayer film for laminated glass (layer y) of 0.30 mm. The sample preparation conditions are shown in Table 1.

[Preparation and Evaluation of Laminated Glass]

A laminated glass was prepared by sandwiching the layer x thus prepared between two sheets of layers y and further sandwiching the obtained interlayer film for laminated glass using two sheets of 2 mm-thick glass (Planilux Clear, produced by Saint Gobain K.K.) and then holding them under reduced pressure at 140°C for 90 minutes.

[Evaluation]

The obtained interlayer film for laminated glass and the obtained laminated glass were evaluated and the results are shown in Table 2. In addition, the laminated glass was evaluated for a first mode (179 Hz) damping value in accordance with ISO 16940 at 10°C and the result was 11%. In addition, a first mode (128 Hz) damping value at 20°C was 23%.

Example 2

A sample was prepared in a same manner as in Example 1, other than using 4 g of a tin-doped indium oxide-isopropanol dispersion at 20 wt% concentration ("ITO isopropanol dispersion" produced by Mitsubishi Materials Corporation) instead of the methanol dispersion of zinc antimonate at 60 wt% concentration in Example 1. The sample preparation conditions are shown in Table 1. The obtained interlayer film for laminated glass and the obtained laminated glass were evaluated for their performance and the results are shown in Table 2.

Example 3

A sample was prepared in a same manner as in Example 1, other than adding 0.2 g of a 25 wt% aqueous solution of a mixture of magnesium acetate and potassium acetate (mixing weight ratio: 2/1) in Example 1. The sample preparation conditions are shown in Table 1. The obtained interlayer film for laminated glass and the obtained laminated glass were evaluated for their performance and the results are shown in Table 2.

Example 4

To a 60 wt% methanol dispersion of anhydrous zinc antimonate ("CX- Z693M- F" produced by Nissan Chemical Industries, Ltd.), which is $ZnSb_2O_6$, 5 parts by weight of phenyltrimethoxysilane ("KBM- 103" produced by Shin- Etsu Chemical Co. , Ltd.) based on 100 parts by weight of the anhydrous zinc antimonate and water were added to be heated to five hours for reflux. This dispersion was concentrated with an evaporator to obtain dried powder, followed by baking at 200°C for two hours. After that, the powder thus obtained was washed with methanol and acetone to elute an unreacted substance for removal, thereby preparing surface treated zinc antimonate. Further, methanol was added to the surface treated zinc antimonate thus prepared and was subjected to grinding with a bead mill, thereby preparing a methanol dispersion of anhydrous zinc antimonate at 10 wt% concentration that was surface treated by phenyltrimethoxysilane.

A sample was prepared in a same manner as in Example 1, other than using 8 g of a methanol dispersion of anhydrous zinc antimonate at 10 wt% concentration that was surface treated by the phenyltrimethoxysilane mentioned above instead of the methanol dispersion of zinc antimonate at 60 wt% concentration in Example 1. The sample preparation conditions are shown in Table 1. The obtained interlayer film for laminated glass and the obtained laminated glass were evaluated for their performance and the results are shown in Table 2.

Comparative Example 1

A dispersion (d1) obtained by mixing 0.27 g of a methanol dispersion of anhydrous zinc antimonate at 60 wt% concentration, 0. 04 g of "DISPERBYK-102" produced by BYK Japan KK as phosphoric acid ester, and 5.2 g of 3G8; and a dispersion (d2) obtained by mixing 10 g of 3G8, 0.14 g of "Tinuvin 328" produced by Ciba Japan K.K. as an ultraviolet absorber, and 0.08 g of a 25 wt% aqueous solution of a mixture of magnesium acetate and potassium acetate (mixing weight ratio: 2/1) were separately mixed with 40 g of polyvinyl butyral (starting polyvinyl alcohol having a viscosity average degree of polymerization of 1700, a degree of acetalization of 70 mol%, vinyl alcohol units of 29 mol%, and vinyl acetate units of 1 mol%). The resulting mixture was kneaded in a Labo Plastomill at 170°C and then was press

molded with a pressing machine at 140°C for five minutes, thereby preparing a single layer of an interlayer film for laminated glass of 0.76 mm. The sample preparation conditions are shown in Table 1. The obtained interlayer film for laminated glass and the obtained laminated glass were evaluated for their performance and the results are shown in Table 2.

Comparative Example 2

A sample was prepared in a same manner as in Example 1, except that the amount of the 3G8 was 5.2 g, the amount of the phosphoric acid ester was 0.8 g and the amount of the polyvinyl butyral (starting polyvinyl alcohol having a viscosity average degree of polymerization of 1700, a degree of acetalization of 70 mol%, vinyl alcohol units of 29 mol%, and vinyl acetate units of 1 mol%) was 40 g in dispersion (d1), and the layer x was prepared in Example 1. The sample preparation conditions are shown in Table 1. The obtained interlayer film for laminated glass and the obtained laminated glass were evaluated for their performance and the results are shown in Table 2.

Comparative Example 3

A sample was prepared in a same manner as in Example 2, other than adding 1.0 g of phosphoric acid ester in Example 2. The sample preparation conditions are shown in Table 1. The obtained interlayer film for laminated glass and the obtained laminated glass were evaluated for their performance and the results are shown in Table 2.

Comparative Example 4

A sample was prepared in a same manner as in Example 1, other than adding 0.4 g of phosphoric acid ester in Example 1. The sample preparation conditions are shown in Table 1. The obtained interlayer film for laminated glass and the obtained laminated glass were evaluated for their performance and the results are shown in Table 2.

Comparative Example 5

A sample was prepared in a same manner as in Example 1, other than not adding the mixture of magnesium acetate and potassium acetate in Example 1. The sample preparation conditions are shown in Table 1. In the present Comparative Example, the alkali (earth) metal content in the interlayer film for laminated glass shown in Table 1 is a result of analyzing the alkali (earth) metal content in the sample thus prepared with an X-ray fluorescence analyzer "RIX 3100" manufactured by Rigaku Corporation. The obtained interlayer film for laminated glass and the obtained laminated glass were evaluated for their performance and the results are shown in Table 2.

[Table 1]

| | | Constitution of Interlayer Film for Laminated Glass | | | | | | |
|---|---|---|---|---|---|---|---|---|
| | | PVB | 3G8*1 | $ZnSb_2O_6$*2 | ITO*2 | Phosphoric Acid Ester*3 | Alkali (Earth) Metal*1 | UV Absorber*2 |
| Example 1 | x | 100 | 56 | 1.5 | - | 0.36 | 0.014 | 0.25 |
| | y | 100 | 38 | - | - | - | 0.012 | 0.25 |
| | Entire Layer | 100 | 42 | 0.3 | - | 0.076 | 0.013 | 0.25 |
| Example 2 | x | 100 | 56 | - | 1.5 | 0.36 | 0.014 | 0.25 |
| | y | 100 | 38 | - | - | - | 0.012 | 0.25 |
| | Entire Layer | 100 | 42 | - | 0.3 | 0.076 | 0.013 | 0.25 |
| Example 3 | x | 100 | 56 | 1.5 | - | 0.36 | 0.035 | 0.25 |
| | y | 100 | 38 | - | - | - | 0.012 | 0.25 |
| | Entire Layer | 100 | 42 | 0.3 | - | 0.076 | 0.017 | 0.25 |

(continued)

| | | Constitution of Interlayer Film for Laminated Glass | | | | | | |
|---|---|---|---|---|---|---|---|---|
| | | PVB | 3G8*1 | $ZnSb_2O_6$*2 | ITO*2 | Phosphoric Acid Ester*3 | Alkali (Earth) Metal*1 | UV Absorber*2 |
| Example 4 | x | 100 | 56 | 1.5*4 | - | 0.36 | 0.014 | 0.25 |
| | y | 100 | 38 | - | - | - | 0.012 | 0.25 |
| | Entire Layer | 100 | 42 | 0.3 | - | 0.076 | 0.013 | 0.25 |
| Comparative Example 1 | x | 100 | 38 | 0.3 | - | 0.073 | 0.012 | 0.25 |
| | y | - | - | - | - | - | - | - |
| | Entire Layer | 100 | 38 | 0.3 | - | 0.073 | 0.012 | 0.25 |
| Comparative Example 2 | x | 100 | 38 | 1.5 | - | 1.5 | 0.012 | 0.25 |
| | y | 100 | 38 | - | - | - | 0.012 | 0.25 |
| | Entire Layer | 100 | 38 | 0.3 | - | 0.3 | 0.012 | 0.25 |
| Comparative Example 3 | x | 100 | 56 | - | 1.5 | 1.8 | 0.014 | 0.25 |
| | y | 100 | 38 | - | - | - | 0.012 | 0.25 |
| | Entire Layer | 100 | 42 | - | 0.3 | 0.38 | 0.013 | 0.25 |
| Comparative Example 4 | x | 100 | 56 | 1.5 | - | 0.72 | 0.014 | 0.25 |
| | y | 100 | 38 | - | - | - | 0.012 | 0.25 |
| | Entire Layer | 100 | 42 | 0.3 | - | 0.15 | 0.013 | 0.25 |
| Comparative Example 5 | x | 100 | 56 | 1.5 | - | 0.36 | 0.001 | 0.25 |
| | y | 100 | 38 | - | - | - | 0.001 | 0.25 |
| | Entire Layer | 100 | 42 | 0.3 | - | 0.076 | 0.001 | 0.25 |

PVB: Polyvinyl Butyral
*1 Unit is parts by weight/PVB 100 parts by weight
*2 Unit is parts by weight/PVB + 3G8 100 parts by weight
*3 "DISPERBYK-102", unit is parts by weight/PVB + 3G8 100 parts by weight
*4 Subjected to surface treatment

[Table 2]

| | Evaluation of Film | Evaluation of Laminated Glass | | | | | | |
|---|---|---|---|---|---|---|---|---|
| | Acid Number of Layer x (KOHmg/g) | Visible Light Transmittance (%) | Solar Transmittance (%) | Haze (%) | YI | | | Glass Adhesion Evaluation |
| | | | | | Initial (%) | After Heat Resistance Test (%) | ΔYI Variation (%) | |
| Example 1 | 1.2 | 82.7 | 64.5 | 0.7 | 2.1 | 4.1 | 2.0 | A |
| Example 2 | 1.1 | 83.0 | 61.6 | 1.8 | 9.4 | 11.5 | 2.1 | A |
| Example 3 | 0.8 | 79.9 | 59.9 | 0.8 | 2.3 | 4.1 | 1.8 | A |
| Example 4 | 1.0 | 82.4 | 65.6 | 1.2 | 3.0 | 4.8 | 1.8 | A |
| Comparative Example 1 | 0.9 | 85.0 | 70.6 | 1.2 | 1.5 | 3.5 | 2.0 | B |
| Comparative Example 2 | 2.6 | 83.2 | 64.6 | 0.5 | 4.7 | 10.8 | 6.1 | B |
| Comparative Example 3 | 3.0 | 78.7 | 60.4 | 3.8 | 19.0 | 23.1 | 4.1 | B |
| Comparative Example 4 | 1.7 | 83.0 | 65.2 | 0.9 | 4.2 | 8.2 | 4.0 | A |
| Comparative Example 5 | 1.6 | 82.8 | 64.4 | 0.7 | 2.9 | 6.4 | 3.5 | A |

From the results shown in Table 2, it is found that the interlayer films for laminated glass and the laminated glasses of the present invention (Examples 1 through 4) have the solar transmittance kept down while maintaining the high visible light transmittance, there is almost no haze even by addition of the alkali metal salt and/or alkali earth metal salt, and also they are excellent in adhesion force stability and heat resistance. In a case of not having a multilayer structure as in Comparative Example 1, the glass adhesion force decreases greatly due to bleeding out of the phosphoric acid ester. Even in a case of having a multilayer structure, when the polyvinyl acetal used for each layer has same primary structure as in Comparative Example 2, the phosphoric acid ester turns out to bleed out easily. In a case of a large amount of the phosphoric acid ester added as in Comparative Example 3, the phosphoric acid ester turns out to bleed out even when using polyvinyl acetal having a different primary structure for each layer. In a case of reducing the phosphoric acid ester to a certain extent as in Comparative Example 4, bleeding out can be suppressed while degradation of the film cannot be suppressed. In a case of a small content of the alkali metal salt and/or alkali earth metal salt as in Comparative Example 5, degradation of the resin derived from the phosphoric acid ester cannot be suppressed.

According to the present invention, it is possible to provide an interlayer film for laminated glass that efficiently shields the heat rays while maintaining the transparency and the adhesion and also is excellent in the durability. A laminated glass using the interlayer film for laminated glass may be preferably used for, for example, a windshield, a side glass, a rear glass, a roof glass of automobiles, a glass portion of vehicles, such as aircraft and trains, architectural glass, and the like, and suppresses rise in temperature, thereby enabling to reduce excessive use of cooling facilities for eco-friendly space design.

Brief Description of the Drawing

[Fig. 1] Fig. 1 is a schematic diagram of a compression shear apparatus of a laminated glass.

Description of the Reference Numerals

1 Compression Shear Testing Apparatus
2 Laminated Glass
3 Lower Jig
4 Upper Jig
5 Glass
6 Interlayer Film

**Claims**

**1.** An interlayer film for laminated glass comprising:

a layer x which contains polyvinyl acetal (A1) having a content of vinyl alcohol units of 22 mol% or less, a plasticizer (B), heat ray shielding microparticles (C), phosphoric acid ester (D), and alkali metal salt and/or alkali earth metal salt (F), and has an acid number in accordance with JIS K2501 of 1.5 KOH mg/g or less; and
a layer y containing polyvinyl acetal (A2) having a content of vinyl alcohol units of from 25 to 34 mol%, the plasticizer (B), and an ultraviolet absorber (E),
wherein the layers y are located on both sides of the layer x.

**2.** The interlayer film for laminated glass according to claim 1, wherein from 0.001 to 2 parts by weight of the heat ray shielding microparticles (C) is contained based on 100 parts by weight of a total amount of the polyvinyl acetal (A1), the polyvinyl acetal (A2), and the plasticizer (B).

**3.** The interlayer film for laminated glass according to claim 1 or 2, wherein surfaces of the heat ray shielding microparticles (C) are treated with an organic silicon compound having a hydrolyzable group.

**4.** The interlayer film for laminated glass according to any one of claims 1 through 3, wherein the heat ray shielding microparticles (C) are made of at least one selected from the group consisting of tin-doped indium oxide, antimony-doped tin oxide, aluminum-doped zinc oxide, indium-doped zinc oxide, gallium-doped zinc oxide, tungsten oxide,

lanthanum hexaboride, cerium hexaboride, anhydrous zinc antimonate, and copper sulfide.

**5.** The interlayer film for laminated glass according to claim 4, wherein the heat ray shielding microparticles (C) are made of anhydrous zinc antimonate.

**6.** The interlayer film for laminated glass according to any one of claims 1 through 5, wherein a laminated glass prepared by sandwiching the interlayer film between two sheets of clear glass having a thickness of 2 mm and adhering them has a first mode damping value in accordance with ISO 16940 at 20°C of 22% or more.

**7.** The interlayer film for laminated glass according to any one of claims 1 through 6, wherein a laminated glass prepared by sandwiching the interlayer film for laminated glass between two sheets of clear glass having a thickness of 2 mm and adhering them has a first mode damping value in accordance with ISO 16940 at 10°C of 10% or more.

**8.** The interlayer film for laminated glass according to any one of claims 1 through 7, wherein the polyvinyl acetal (A1) has a content of vinyl acetate units of from 5 to 8 mol% of the total and the polyvinyl acetal (A2) has a content of vinyl acetate units of from 0.1 to 11 mol% of the total.

**9.** The interlayer film for laminated glass according to any one of claims 1 through 8, wherein a difference between a content of the plasticizer (B) based on 100 parts by weight of the polyvinyl acetal (A1) in the layer x and a content of the plasticizer (B) based on 100 parts by weight of the polyvinyl acetal (A2) in the layer y is 5 parts by weight or more.

**10.** A laminated glass obtained by adhering a plurality of glass sheets with the interlayer film for laminated glass according to any one of claims 1 through 9.

**11.** A method of producing the interlayer film for laminated glass according to any one of claims 1 through 9, comprising melt mixing a dispersion (d1) of the heat ray shielding microparticles (C) and the plasticizer (B) with the polyvinyl acetal (A1), and molding into a film.

**12.** The method of producing the interlayer film for laminated glass according to claim 11, wherein the dispersion (d1) of the heat ray shielding microparticles (C), and the alkali metal salt and/or alkali earth metal salt (F) are mixed separately with the polyvinyl acetal (A1), and melt molding into a film.

**13.** The method of producing the interlayer film for laminated glass according to claim 12, wherein a dispersion (d2) of the alkali metal salt and/or alkali earth metal salt (F) is mixed with the polyvinyl acetal (A1).

[Fig. 1]

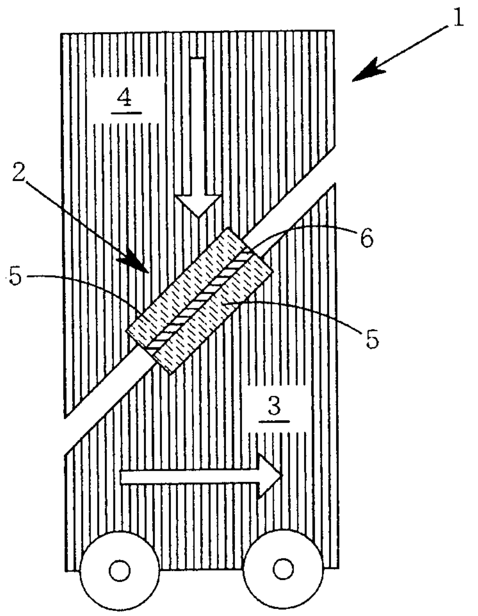

**INTERNATIONAL SEARCH REPORT**

International application No.
PCT/JP2011/078211

A. CLASSIFICATION OF SUBJECT MATTER
*C03C27/12*(2006.01)i, *B32B27/18*(2006.01)i, *B32B27/22*(2006.01)i, *B32B27/30*(2006.01)i, *C01G30/02*(2006.01)i

According to International Patent Classification (IPC) or to both national classification and IPC

B. FIELDS SEARCHED

Minimum documentation searched (classification system followed by classification symbols)
C03C27/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-206453 A (Sekisui Chemical Co., Ltd.), 04 August 2005 (04.08.2005), entire text & US 2006/0110593 A1 & EP 1698600 A1 & WO 2005/066094 A1 & CA 2548573 A & KR 10-2006-0126744 A & CN 1898175 A & BRA PI0417214 & RU 2006127042 A & AU 2004312250 A | 1-13 |
| A | WO 2006/004162 A1 (Sekisui Chemical Co., Ltd.), 12 January 2006 (12.01.2006), claim 10 & US 2010/0040868 A1 & US 2007/0172642 A1 & US 7625634 B2 & EP 1785404 A1 & CN 1964928 A & AU 2005260458 A & CA 2567792 A & KR 10-2007-0030313 A & RU 2385300 C | 1-13 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February, 2012 (14.02.12) | 21 February, 2012 (21.02.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003265033 A
- WO 2005012454 A1
- JP 2006103069 A
- JP 2003261360 A
- WO 2005118503 A1
- WO 2007121079 A2
- JP 2005206453 A
- JP 2008534315 A
- JP 2003252657 A
- EP 2008054094 A
- JP 2004143008 A
- JP 2001526165 A